# EUROPÄISCHE PATENTSCHRIFT

(11) **EP 2 631 337 B1**
(45) Veröffentlichungstag und Bekanntmachung des Hinweises auf die Patenterteilung: **23.09.2015**
(21) Anmeldenummer: 12156901.6
(22) Anmeldetag: 24.02.2012
(51) Int. Cl.: D01F 6/86, D06M 15/507, D06M 17/04, B32B 5/24, B32B 27/12, C08J 5/04, C09J 167/02, D04H 1/54, D04H 3/12, D04H 1/587

(54) **Faserharzverbundwerkstoff sowie Verfahren zu dessen Herstellung**
Fibre-resin composite material and method for producing the same
Matériau composite fibres-résine, ainsi que son procédé de fabrication

(43) Veröffentlichungstag der Anmeldung: 28.08.2013
(73) Patentinhaber: EMS-Patent AG, 7013 Domat/Ems (CH)
(72) Erfinder: Hoppe, Ralf, CH-7000 Chur (CH)
(74) Vertreter: Pfenning, Meinig & Partner GbR

(56) Entgegenhaltungen:
- EP-A1- 1 236 567
- EP-A1- 1 359 240
- EP-A2- 0 698 648
- JP-A- 6 200 480
- JP-A- 2005 060 879
- US-A- 2 801 189

## Beschreibung

Die Erfindung betrifft einen Faserharzverbundwerkstoff enthaltend mindestens ein duroplastisches Harz sowie mindestens eine fixierte und/oder stabilisierte Faserstruktur aus einem faserhaltigen Material sowie einem Mittel zu deren Fixierung und Stabilisierung. Bei dem Mittel zur Fixierung und Stabilisierung handelt es sich um einen statistischen Copolyester, der aus den Disäurekomponenten Terephthalsäure und ggf. Isophthalsäure sowie den Diolkomponenten Butandiol, Diethylenglykol undTriethylenglykol gebildet ist. Ebenso wird ein Verfahren zur Herstellung dieses Faserverbundwerkstoffs bereitgestellt.

Materialien mit einem hohen Festigkeits- Masse-Verhältnis, die aus einem Faserharzverbundstoff hergestellt werden, finden in vielen Bereichen Anwendung, wo Festigkeit, Korrosionsbeständigkeit und geringes Gewicht erwünscht sind. So können derartige Faserharzverbundstoffe beispielsweise gut in Bauteilen für die Luftfahrt eingesetzt werden. Ebenso eignen sich diese Verbundstoffe hervorragend für Sportausrüstungsgegenstände, wie z.B. Tennisschläger oder Golfschläger.

In diesen Verbundstoffen liegen die Verstärkungselemente entweder in Form von unidirektionalen Filamenten oder, in flächiger Form, als Faser-Geflechte, Faser-Gewebe bzw. Faser-Gelege vor. Die Fasern in Form von Filamenten oder Geflechten, Geweben oder Gelegen müssen fixiert bzw. stabilisiert werden, was einer vereinfachten Handhabung dient sowie die Verklebung einzelner oder mehrerer dieser Flächenstrukturen durch Temperatur- oder Druckeinwirkung ermöglicht. Eine stabile Vorformung der fixierten bzw. verklebten, einlagigen oder mehrlagigen Flächenstrukturen zu Preforms ist ebenfalls durch den Einfluss von Temperatur und Druck steuerbar.

Die so hergestellten und vorbehandelten Verstärkungsmaterialien werden dann in eine Polymermatrix eingebettet. Hierbei kommt der Haftung zwischen Verstärkungsmaterial und Polymermatrix eine besondere Bedeutung zu.

Aus der EP 1705 269 A1 sind thermoplastische Fasermaterialien bekannt, die aus einem Polyhydroxyether enthaltenden Rohstoff gesponnen sind. Dieser Fasern aus Polyhydroxyether werden als Fixierungsfäden für Verstärkungsfasern vor deren Einbettung in die Polymermatrix verwendet.

Aus der EP 1 236 567 A1 ist ein Verfahren zur Herstellung einer waschbeständigen Verklebung zwischen einer wasserundurchlässigen und wasserdampfdurchlässigen Folie auf Copolyetheresterbasis und mindestens einem Substrat auf Polyesterbasis aus einem Gewebe oder Gewirke zum Erzielen eines sortenreinen Textilverbundes mit guter Waschbeständigkeit bekannt.

Weiterhin sind aus der EP 0 698 648 A2 Copolyesterschmelzklebemassen bekannt, die hervorragende Klebeeigenschaften, einen niedrigen Schmelzpunkt, eine schnelle Kristallisation und gute Resistenz gegenüber Waschen und Reinigen aufweisen.

Ausgehend hiervon war es Aufgabe der vorliegenden Erfindung Faserstrukturen mit verbesserter Stabilität bereitzustellen.

Diese Aufgabe wird durch den Faserharzverbundwerkstoff mit den Merkmalen des Anspruchs 1 und das Verfahren zu dessen Herstellung gelöst.

Erfindungsgemäß wird ein Faserharzverbundwerkstoff enthaltend mindestens ein duroplastisches Harz sowie mindestens eine fixierte und/oder stabilisierte Faserstruktur aus einem faserhaltigen Material sowie einem Mittel zu dessen Fixierung und Stabilisierung bereitgestellt.

Das Mittel zur Fixierung und Stabilisierung ist erfindungsgemäß ein statistischer Copolyester ist, der aus folgenden Komponenten gebildet ist:
von 55 bis 100 Mol-% Terephthalsäure,
von 0 bis 45 Mol-% Isophthalsäure,
von 35 bis 75 Mol-% Butandiol,
von 15 bis 35 Mol-% Diethylenglykol,
von 10 bis 30 Mol-% Triethylenglykol.

Hierbei ist die Summe der molaren Anteile Terephthalsäure und Butandiol maximal 150 Mol-%, bezogen auf die Gesamtdisäure- bzw. Gesamtdiolmenge von je 100 Mol-%.

Vorzugsweise ist der mindestens eine statistische Copolyester aus folgenden Komponenten gebildet:
von 70 bis 100 Mol-%, bevorzugt von 85 bis 100 Mol-% Terephthalsäure,
von 0 bis 30 Mol-%, bevorzugt von 0 bis 15 Mol Isophthalsäure,
von 45 bis 65 Mol-%, bevorzugt von 47 bis 57 Mol-% Butandiol,
von 20 bis 30 Mol-%, bevorzugt von 23 bis 28 Mol-% Diethylenglykol,
   von 15 bis 25 Mol-%, bevorzugt von 20 bis 25 Mol-% Triethylenglykol.

Hierbei beträgt die Summe der molaren Anteile von Terephthalsäure und Butandiol maximal 150 Mol-%, bezogen auf die Gesamtdisäure- bzw. Gesamtdiolmenge von je 100 Mol-%.

In einer bevorzugten Ausführungsform kann der mindestens eine statistische Copolyester 0 bis 2 Gew.-%, bevorzugt 0,05 bis 1 Gew.-% Zusatzstoffe, insbesondere Nukleierungsmittel, Stabilisatoren, Gleitmittel, Antischaummittel, Kondensationskatalysatoren oder Mischungen hiervon enthalten, wobei die Summe aus Copolyester und Zusatzstoffen 100 Gew.-% ergibt.

Der erfindungsgemäß eingesetzte Copolyester weist vorzugsweise eine Schmelzviskosität, gemessen nach ISO/DIN 1133, bei 150 °C und einer Belastung von 2,16 kg, im Bereich von 100 bis 3000 Pas, bevorzugt von 100 bis 600 Pas, besonders bevorzugt von 120 bis 500 Pas und ganz besonders bevorzugt von 150 bis 300 Pas auf.

Wird der erfindungsgemäße Copolyester in Form eines Fixierungsfadens, z.B. als Fasergarn, Multifilament, Monofilament eingesetzt weist er vorzugsweise eine Schmelzviskosität, gemessen nach ISO/DIN 1133, bei 160 °C und einer Belastung von 2,16 kg, im Bereich von 1000 bis 3000 Pas, bevorzugt von 1500 bis 2500, besonders bevorzugt von 1700 bis 2200 Pas auf.

Der erfindungsgemäß verwendete Copolyester weist vorzugsweise einen Schmelzpunkt, gemessen nach ISO 11357 mit einer Aufheizrate von 20 K/min, im Bereich von 60 bis 150 °C, bevorzugt von 70 bis 150 °C und besonders bevorzugt von 90 bis 140 °C auf.

Die Herstellung des Polyesters erfolgt bevorzugt nach der folgenden Synthese.

Die aromatische Dicarbonsäure bzw. Dicarbonsäuremischung wird im Diol dispergiert, der Veresterungskatalysator und gegebenenfalls geeignete Hitzestabilisatoren hinzugefügt, wobei das Diol im Überschuss von 5 bis 50 Mol-% eingesetzt wird. Die Veresterung erfolgt in einem Temperaturbereich von 200 bis 280 °C, bevorzugt 210 bis 260 °C, wobei langsam aufgeheizt wird. Dabei wird das entstehende Wasser abdestilliert.

Die anschliessende Polykondensation wird in einem inertisierten Autoklaven in einem Temperaturbereich von 220 bis 270 °C, bevorzugt 230 bis 260 °C und gegebenenfalls in Gegenwart eines Polykondensationskatalysators (1 bis 100 ppm, bevorzugt 10 bis 45 ppm bezogen auf die Menge des Polyesters) durchgeführt. Dabei wird schrittweise Vakuum angelegt und bis zu einem Endvakuum von unter 1 mbar überschüssiges Diol abgezogen. Nach Erreichen der gewünschten Viskosität wird der entstandene Polyester ausgetragen, granuliert und getrocknet.

Als Veresterungskatalysatoren können Salze der Metalle Mn, Zn, Ca, Sn, Ti oder Mg, z.B. mit niederen aliphatischen Alkoholen, z.B. Butanol verwendet werden. Als Polykondensationskatalysatoren eignen sich Verbindungen auf Basis von Antimon, Titan, Zinn oder Germanium, z.B. Antimontrioxyd. Sowohl Veresterungs-, als auch Polykondensationskatalysatoren sind dem Fachmann in grosser Zahl bekannt.

Das faserhaltige Material kann bevorzugt ein unidirektionales Filament oder ein flächiges faserhaltiges Material aus der Gruppe der Gewebe, Vliese, Gestricke, Gewirke oder Gelege enthalten oder aus diesen im Wesentlichen bestehen. Ebenso möglich sind Kombinationen aus Filamenten und flächigen faserhaltigen Materialien.

Die faserhaltigen Materialien sind ausgewählt aus der Gruppe bestehend aus :
- Glasfasern,
- Carbonfasern,
- Mineralfasern,
- Synthetische Fasern, insbesondere Polymerfasern, bevorzugt aus Polyestern und Polyamiden, insbesondere aus Polyaramiden, sowie
- Mischungen hiervon.

Erfindungsgemäß wird ebenso ein Verfahren zur Herstellung des zuvor beschriebenen Faserharzverbundwerkstoffs bereitgestellt, bei dem das mindestens eine Mittel zur Fixierung und Stabilisierung des faserhaltigen Materials durch Pulverpunkt-, Pastenpunkt- oder Streubeschichtung oder als Paste, Suspension, Folie, Web, Nonwoven, fixiertes Flächengelege oder -gewebe oder versprühte Schmelze auf dem faserhaltigen Material appliziert wird und anschließend durch Einwirkung von Temperatur und/oder Druck eine Fixierung der Faserstruktur erfolgt.

Alternativ kann die Fixierung auch durch Vernähen mit Fixierungsfäden, hergestellt aus dem mindestens einen statistischen Copolyester, erfolgen. Die Fixierung wird hierbei bereits ohne die anschliessende Einwirkung von Temperatur und/oder Druck erreicht.

Als Applikationsmethoden bevorzugt sind Streubeschichtung oder der Auftrag als Paste, Suspension, Folie, Web oder versprühte Schmelze oder das Vernähen. Die Applikation via Streubeschichtung, Web, versprühte Schmelze oder Vernähen ist besonders bevorzugt.

Vorzugsweise handelt es sich bei dem duroplastischen Harz um ein Epoxidharz.

Überraschend hat sich gezeigt, dass durch die Fixierung mit dem erfindungsgemässen Copolyester die Haftung gegenüber der für die Einbettung verwendeten Polymermatrix verbessert wird.

Der Faserharzverbundwerkstoff weist in der Prüfung der interlaminaren Scherfestigkeit (ILSS) nach ASTM D2344M bevorzugt eine Festigkeit von mindestens 55 MPa, besonders bevorzugt von mindestens 60 MPa, bei einer Messtemperatur von 23 °C auf.

Es ist weiterhin bevorzugt, dass der erfindungsgemäße Faserharzverbundwerkstoff in der Prüfung der Restdruckfestigkeit nach Schlagbeanspruchung (engl. Compression after Impact, CAI) nach AITM 1.0010 eine Restdruckfestigkeit von mindestens 185 MPa, bevorzugt von mindestens 210 MPa, besonders bevorzugt von mindestens 245 MPa aufweist.

Ein zusätzlicher Aspekt betrifft die Verwendung der zuvor erläuterten Faserstruktur als Verstärkungsmaterial für Epoxidharze, insbesondere in den Bereichen Sport, Freizeit, Maschinenindustrie, Elektronik, Bau, Medizintechnik, Verkehrs- und Transportmittel und Luft- und Raumfahrttechnik.

Besonders bevorzugt ist die Verwendung der zuvor erläuterten Faserstruktur als Verstärkungsmaterial für Epoxidharze in den Bereichen Sport, Freizeit, Maschinenindustrie, Verkehrs- und Transportmittel und Luftfahrttechnik.

Anhand der nachfolgenden Beispiele soll der erfindungsgemäße Gegenstand näher beschrieben werden, ohne diesen auf die hier gezeigten spezifischen Ausführungsformen einschränken zu wollen.

In Tabelle 1 sind die Zusammensetzungen von erfindungsgemäßen Copolyestern (Komponenten (A1) bis (A4)) und die Zusammensetzung von Vergleichssystemen (CoPES I, CoPES II, EVA, PA 6/12/66, PA 12, PE) dargestellt.

**Tabelle 1**

| **Komponenten** | **Beschreibung** |
|---|---|
| CoPES (A1) | Copolyester aus Terephthalsäure, Isophthalsäure, Butandiol, Diethylenglykol und Triethylenglykol (90/10/50/30/20 Mol-%) |
| | SV* 450 Pas, Schmelzpunkt 103 °C |
| CoPES(A2) | Copolyester aus Terephthalsäure, Isophthalsäure, Butandiol, Diethylenglykol und Triethylenglykol (88/12/50/30/20 Mol-%) |
| | SV* 226 Pas, Schmelzpunkt 106 °C |
| CoPES (A3) | Copolyester aus Terephthalsäure, Isophthalsäure, Butandiol, Diethylenglykol und Triethylenglykol (100/-/50/30/20 Mol-%) |
| | SV* 230 Pas, Schmelzpunkt 135 °C |
| CoPES (A4) | Copolyester aus Terephthalsäure, Isophthalsäure, Butandiol, Diethylenglykol und Triethylenglykol (60/40/75/10/15 Mol-%) |
| | SV* 190 Pas, Schmelzpunkt 95 °C |
| CoPES I | Copolyester aus Terephthalsäure, Isophthalsäure, Dimersäure und Butandiol (48/37/15/100 Mol-%) |
| | SV* 300 Pas, Schmelzpunkt 115 °C |
| CoPES II | Copolyester aus Terephthalsäure, Isophthalsäure und Butandiol (50/50/100 Mol-%) |
| | SV* 720 Pas, Schmelzpunkt 127 °C |
| EVA | Copolymer aus Ethylen und Vinylacetat |
| | MFR** 45 g/10 min, Dichte 0,95 g/cm3, Schmelzpunkt 83 °C (Melthene MX09, Tosoh Corporation, Japan) |
| PA 6/12/66 | Copolyamid 6/12/66 (38/50/12 Mol-%) aus ε-Caprolactam, Laurinlactam, Hexamethylendiamin und Adipinsäure |
| | SV* 560 Pas, Schmelzpunkt 123 °C |
| PA 12 | Polyamid aus Laurinlactam |
| | SV 180 Pas bei 230 °C und 2,16 kg, Schmelzpunkt 178 °C |
| PE-LD | Polyethylen niedriger Dichte |
| | MFR*** 7 g/10min, Dichte 0,922 g/cm3, Vicat Erweichungspunkt 86 °C (HP7022, SABIC, Saudi Arabien) |

| | |
|---|---|
| * Schmelzviskosität bei 160 °C und 2,16 kg Belastung ** Melt Flow Rate bei 160 °C und 2,16 kg Belastung *** Melt Flow Rate bei 190 °C und 2,16 kg Belastung | |

Alternativ zu Melthene MX09 kann auch Melthene MX06 verwendet werden.

Die Prüfungen und Messungen wurden nach folgenden Normen und an folgenden Prüfkörpern durchgeführt.

### Zug-Schäl-Versuch

DIN 54310

Messtemperatur 23 °C

### Prüfkörperherstellung

Eine Flachfolie des zu prüfenden Thermoplasts (Flächengewicht 200 g/m2) wird mittels einer Doppelbandpresse auf ein Polyester/Wolle-Gewebe laminiert (55/45 Gew.-%, braun, Flächengewicht 210 g/m2, Hersteller: Becker Tuche, Deutschland oder Marzotto, Italien). Die Laminiertemperatur liegt dabei 30 °C über dem Schmelzpunkt des Thermoplasten. Nach der Lagerung des Laminats über 24 h bei 50 °C wird ein Muster 24 x 8 cm herausgeschnitten. Auf das Muster wird ein Kunststoffrahmen (15 x 5 cm) gestellt, wobei an einer Schmalseite ein Wachspapierstreifen untergelegt wird. Der Rahmen wird mit frisch angerührter, entgaster Epoxidmischung 3 mm hoch gefüllt. Das Epoxid härtet 12 bis 16 h bei 23 °C aus. Danach wird der Rahmen entfernt. Der Wachspapierstreifen ermöglicht das Trennen von Thermoplastfolie und Epoxid auf einer Länge von ca. 3 cm.

Das Epoxid wird aus einem Bisphenol A Epoxidharz mit einer Epoxidzahl von 0,520 bis 0,550 eq/100g (Grilonit G 1302, EMS-CHEMIE AG) und einem Aminhärter mit einer Aminzahl von 290 bis 350 mg KOH/g (Grilonit H 84048, EMS-CHEMIE AG) im Gewichtsverhältnis 2 zu 1 gemischt.

### Bestimmung der interlaminaren Scherfestigkeit, ILSS (englisch: Interlaminar Shear Strenght)

ASTM D2344M

Messtemperatur: 23 °C und 80 °C

### Prüfkörperherstellung

Zuerst werden Platten mit den Massen 330 x 330 x 4 mm im Harzinjektionsverfahren (Resin Transfer Molding, RTM) hergestellt. Dazu wird ein unidirektionales Carbonfaser Filament mit einem Flächengewicht von 298 g/m2 manuell in die auf 80 ° vorgeheizte Formkavität einer beheizbaren Presse gelegt, mit 18 g Thermoplastpulver gleichmässig mittels eines Siebes bestreut und dieser Vorgang 15 mal wiederholt, wobei die 2. Lage des unidirektionalen Carbonfaser Filaments um - 45 °, die 3. Lage um + 45 ° und die 4. Lage um 90 ° gegenüber der 1. Lage gedreht wird. Die 5. Lage des 16-lagigen Aufbaues besitzt somit die gleiche Ausrichtung wie die 1. Lage. Auf jeder Lage, mit Ausnahme der 16. Lage werden 18 g Thermoplastpulver verteilt. Nach dem Schliessen der Form wird unter Vakuum (Restdruck 0,05 mbar) auf 120 °C geheizt und nach Erreichen der Temperatur das auf 80 °C vorgeheizte, einkomponenten Epoxidharz (HexFlow RTM6 der Hexcel Corporation, USA) eingefüllt. Gehärtet wird bei 180 °C und 6 bar Druck für 90 min. Anschliessend wird Druck gesenkt und gleichzeitig abgekühlt. Das Vakuum wird bis zum öffnen der Form aufrecht erhalten. Als unidirektionales Carbonfaser Filament wird IMS 60 E13 der Toho Tenax Co., Japan verwendet. Nach der Qualitätsprüfung der Platte mittels Ultraschall werden Prüfkörper mit den Massen 24 x 8 x 4 mm ausgeschnitten. Die Prüfkörper werden vor der Messung 60 min bei der Messtemperatur temperiert. Die Druckprüfung erfolgt in einer Klimakammer.

Die Prüfkörper für den Vergleichsversuch wurden entsprechend hergestellt, jedoch ohne Thermoplastpulver zwischen den Carbonfaser Filamenten.

### Bestimmung der Restdruckfestigkeit nach Schlagbeanspruchung, CAI (englisch: Compression after Impact)

AITM 1.0010 (Airbus-Norm)

Messtemperatur: 23 °C

### Prüfkörperherstellung

Die Herstellung der Platten erfolgt wie beim ILSS-Test beschrieben. Nach der Qualitätsprüfung mittels Ultraschall werden Prüfkörper mit den Massen 150 x 100 x 4 mm ausgeschnitten.

Die Prüfkörper für den Vergleichsversuch wurden entsprechend hergestellt, jedoch ohne Thermoplastpulver zwischen den Carbonfaser Filamenten.

Vor der Festigkeitsprüfung wird mittels Fallturm eine Schlagbeanspruchung mit 30 J durchgeführt. Die durch diese Schlagbeanspruchung erzeugte Delaminationsfläche wird mittels Ultraschall bestimmt. Anschliessend wird am selben Prüfkörper die verbleibende Festigkeit gemessen und als Restdruckfestigkeit angegeben.

### Schmelzviskosität (SV) bzw. Schmelze-Massefliessrate (MFR):

ISO 1133

Granulat

### Schmelzpunkt

ISO-Norm 11357

Granulat

Die Differential Scanning Calorimetry (DSC) wurde mit Aufheizrate von 20 K/min durchgeführt. Es wird die Temperatur am Peakmaximum angegeben.

Mit den genannten erfindungsgemäßen Materialien und den Vergleichsmaterialien wurden Vergleichsversuche hinsichtlich der Materialeigenschaften durchgeführt.

In Tabelle 2 sind hierbei die Ergebnisse der Zug-Schäl-Prüfung dargestellt.

**Tabelle 2**

| **Beispiel** | **Thermoplast** | **Haftwert [N/5cm]** |
|---|---|---|
| 1 | CoPES (A1) | 132 |
| 2 | CoPES (A2) | 149 |
| 3 | CoPES (A3) | 150 |
| 4 | CoPES (A4) | 128 |

| **Vergleichsbeispiel** | | |
|---|---|---|
| 5 | CoPES I | 25 |
| 6 | CoPES II | 11 |
| 7 | EVA | 34 |
| 8 | PA 6/12/66 | 7 |
| 9 | PA 12 | 1 |
| 10 | PE-LD | 1 |

Die mit den erfindungsgemässen Copolyestern (A1) bis (A4) realisierten Haftwerte (Beispiel 1 bis 4) sind mindestens 3,7 mal höher als diejenigen, die mit nicht erfindungsgemässen Copolyestern, Ethylenvinylacetat, verschiedenen Polyamiden bzw. PE niedriger Dichte als Thermoplast erreicht wurden (Vergleichsbeispiele 5 bis 10). Im weiteren werden daher nur noch die erfindungsgemässen Copolyester geprüft.

In Tabelle 3 sind die Ergebnisse der Prüfung der interlaminaren Scherfestigkeit (ILSS) dargestellt.

**Tabelle 3**

| **Beispiel** | **Thermoplast** | **Festigkeit [MPa]** | |
|---|---|---|---|
| | | 23 °C | 80 °C |
| 11 | CoPES (A1) | 65 | 49 |
| 12 | CoPES (A2) | 67 | 51 |
| 13 | CoPES (A3) | 68 | 57 |
| 14 | CoPES (A4) | 63 | 48 |

| **Vergleichsbeispiel** | | | |
|---|---|---|---|
| 15 | ohne | 50 | 45 |

Die Beispiele 11 bis 14 zeigen, dass der Verbundwerkstoff durch die Verwendung der erfindungsgemässen Copolyester sowohl bei 23 °C Messtemperatur, als auch bei 80 °C Messtemperatur gegenüber einem Verbundwerkstoff ohne erfindungsgemässem Copolyester (Vergleichsbeispiel 15) eine erhöhte Festigkeit aufweist.

In Tabelle 4 sind die Ergebnisse der Prüfung der Restdruckfestigkeit nach Schlagbeanspruchung (CAI) dargestellt, d.h. die Restdruckfestigkeit, die am Prüfkörper nach der vorherigen Schlagbeanspruchung mit 30 J noch gemessen wird und die durch die Schlagbeanspruchung entstandene Delaminationsfläche.

**Tabelle 4**

| **Beispiel** | **Thermoplast** | **Restdruckfestigkeit [MPa]** | **Delaminationsfläche [mm2]** |
|---|---|---|---|
| 16 | CoPES (A1) | 255 | 890 |
| 17 | CoPES (A2) | 259 | 850 |
| 18 | CoPES (A3) | 258 | 860 |
| 19 | CoPES (A4) | 253 | 900 |

| **Vergleichsbeispiel** | | | |
|---|---|---|---|
| 20 | ohne | 153 | 6050 |

Die Beispiele 16 bis 19 zeigen, dass der Verbundwerkstoff durch die Verwendung der erfindungsgemässen Copolyester gegenüber einem Verbundwerkstoff ohne erfindungsgemässem Copolyester (Vergleichsbeispiel 20) sowohl deutlich eine erhöhte Festigkeit, als auch eine wesentlich kleinere Delaminationsfläche aufweist.

## Patentansprüche

1. Faserharzverbundwerkstoff enthaltend mindestens ein duroplastisches Harz sowie mindestens eine fixierte und/oder stabilisierte Faserstruktur aus einem faserhaltigen Material ausgewählt aus der Gruppe bestehend aus
• Glasfasern,
• Carbonfasern,
• Mineralfasern,
• Synthetische Fasern,
• Mischungen hiervon
sowie einem Mittel zu dessen Fixierung und Stabilisierung,
**dadurch gekennzeichnet, dass** das Mittel zur Fixierung und Stabilisierung mindestens ein statistischer Copolyester ist, der aus folgenden Komponenten gebildet ist:
von 55 bis 100 Mol-% Terephthalsäure,
von 0 bis 45 Mol-% Isophthalsäure,
von 35 bis 75 Mol-% Butandiol,
von 15 bis 35 Mol-% Diethylenglykol,
von 10 bis 30 Mol-% Triethylenglykol,
wobei die Summe der molaren Anteile von Terephthalsäure und Butandiol maximal 150 Mol-% beträgt, bezogen auf die Gesamtdisäure- bzw. Gesamtdiolmenge von je 100 Mol-%.

2. Faserharzverbundwerkstoff nach Anspruch 1,
**dadurch gekennzeichnet, dass** der mindestens eine statistische Copolyester aus folgenden Komponenten gebildet ist:
von 70 bis 100 Mol-%, bevorzugt von 85 bis 100 Mol-% Terephthalsäure,
von 0 bis 30 Mol-%, bevorzugt von 0 bis 15 Mol Isophthalsäure,
von 45 bis 65 Mol-%, bevorzugt von 47 bis 57 Mol-% Butandiol,
von 20 bis 30 Mol-%, bevorzugt von 23 bis 28 Mol-% Diethylenglykol,
von 15 bis 25 Mol-%, bevorzugt von 20 bis 25 Mol-% Triethylenglykol,
wobei die Summe der molaren Anteile von Terephthalsäure und
Butandiol maximal 150 Mol-% beträgt, bezogen auf die Gesamtdisäure- bzw. Gesamtdiolmenge von je 100 Mol-%.

3. Faserharzverbundwerkstoff nach einem der vorhergehenden Ansprüche,
**dadurch gekennzeichnet, dass** der mindestens eine statistische Copolyester 0 bis 2 Gew.-%, bevorzugt 0,05 bis 1 Gew.-% Zusatzstoffe, insbesondere Nukleierungsmittel, Stabilisatoren, Gleitmittel, Antischaummittel, Kondensationskatalysatoren enthält, wobei die Summe aus Copolyester und Zusatzstoffen 100 Gew.-% ergibt.

4. Faserharzverbundwerkstoff nach einem der vorhergehenden Ansprüche,
**dadurch gekennzeichnet, dass** der mindestens eine Copolyester eine Schmelzviskosität, gemessen nach ISO/DIN 1133, bei 160 °C und einer Belastung von 2,16 kg, im Bereich von 100 bis 3000 Pas, bevorzugt von 100 bis 600 Pas, besonders bevorzugt von 120 bis 500 Pas und ganz besonders bevorzugt von 150 bis 300 Pas aufweist.

5. Faserharzverbundwerkstoff nach einem der Ansprüche 1 bis 3,
**dadurch gekennzeichnet, dass** der mindestens eine Copolyester als Fixierungsfaden vorliegt und eine Schmelzviskosität, gemessen nach ISO/DIN 1133, bei 160 °C und einer Belastung von 2,16 kg, im Bereich von 1000 bis 3000 Pas, bevorzugt von 1500 bis 2500 Pas und besonders bevorzugt von 1700 bis 2200 Pas aufweist.

6. Faserharzverbundwerkstoff nach einem der vorhergehenden Ansprüche,
**dadurch gekennzeichnet, dass** der mindestens eine Copolyester einen Schmelzpunkt, gemessen nach ISO 11357 mit einer Aufheizrate von 20 K/min, im Bereich von 60 bis 160 °C, bevorzugt von 70 bis 150 °C und besonders bevorzugt von 90 bis 140 °C aufweist.

7. Faserharzverbundwerkstoff nach einem der vorhergehenden Ansprüche,
**dadurch gekennzeichnet, dass** das faserhaltige Material ein unidirektionales Filament oder ein flächiges faserhaltiges Material aus der Gruppe der Gewebe, Vliese, Gestricke, Gewirke, Gelege oder Kombinationen hiervon ist.

8. Faserharzverbundwerkstoff nach einem der vorhergehenden Ansprüche,
**dadurch gekennzeichnet, dass** das mindestens eine duroplastische Harz ein Epoxidharz ist.

9. Faserharzverbundwerkstoff nach einem der vorhergehenden Ansprüche,
**dadurch gekennzeichnet, dass** der Faserharzverbundwerkstoff im Inter-Laminat-Scherfestigkeits-Test eine Festigkeit von mindestens 55 MPa, bevorzugt von mindestens 60 MPa, bei einer Messtemperatur von 23 °C aufweist.

10. Faserharzverbundwerkstoff nach einem der vorhergehenden Ansprüche,
**dadurch gekennzeichnet, dass** der Faserharzverbundwerkstoff in der Prüfung der Restdruckfestigkeit nach Schlagbeanspruchung (CAI) eine Restdruckfestigkeit von mindestens 185 MPa, bevorzugt von mindestens 210 MPa und besonders bevorzugt von mindestens 245 MPa aufweist.

11. Faserverbundwerkstoff nach einem der vorhergehenden Ansprüche, **dadurch gekennzeichnet, dass** der Faserverbundwerkstoff in den Bereichen Sport, Freizeit, Maschinenindustrie, Elektronik, Bau, Medizintechnik, Verkehrs- und Transportmittel und Luft- und Raumfahrttechnik einsetzbar ist.

12. Verfahren zur Herstellung eines Faserverbundwerkstoffs nach einem der vorhergehenden Ansprüche, bei dem das mindestens eine Mittel zur Fixierung und Stabilisierung des faserhaltigen Materials durch Pulverpunkt-, Pastenpunkt- oder Streubeschichtung oder als Paste, Suspension, Folie, Web, Nonwoven, fixiertes Flächengelege oder -gewebe oder versprühte Schmelze auf dem faserhaltigen Material appliziert wird und anschließend durch Einwirkung von Temperatur und/oder Druck eine Fixierung der Faserstruktur erfolgt.

## Claims

1. Fiber-resin composite material containing at least one thermosetting resin as well as at least one fixed and/or stabilized fiber structure from a fibrous material selected from the group consisting of
• glass fibers,
• carbon fibers,
• mineral fibers,
• synthetic fibers,
• mixtures hereof
and an agent for its fixing and stabilizing,
**characterized in that** the agent for fixing and stabilizing is at least one statistical copolyester which is formed from the following components:
from 55 to 100 mol% terephthalic acid,
from 0 to 45 mol% isophthalic acid,
from 35 to 75 mol% butanediol,
from 15 to 35 mol% diethylene glycol,
from 10 to 30 mol% triethylene glycol,
wherein the sum of the molar fractions of terephthalic acid and
butanediol is a maximum of 150 mol% with respect to the total diacid and total diol quantities of 100 mol% each.

2. Fiber-resin composite material in accordance with claim 1, **characterized in that** the at least one statistical copolyester is formed from the following components:
from 70 to 100 mol%, preferably from 85 to 100 mol% terephthalic acid,
from 0 to 30 mol°/, preferably from 0 to 15 mol% isophthalic acid;
from 45 to 65 mol%, preferably from 47 to 57 mol% butanediol;
from 20 to 30 mol%, preferably from 23 to 28 mol% diethylene glycol;
from 15 to 25 mol%, preferably from 20 to 25 mol% triethylene glycol,
wherein the sum of the molar fractions of terephthalic acid and
butanediol is a maximum of 150 mol% with respect to the total diacid and total diol quantities of 100 mol% each.

3. Fiber-resin composite material in accordance with one of the preceding claims,
**characterized in that** the at least one statistical copolyester contains 0 to 2% by weight, preferably 0.05 to 1% by weight additives, in particular nucleation agents, stabilizers, lubricants, antifoaming agents, condensation catalysts, with the sum of copolyester and additives producing 100% by weight.

4. Fiber-resin composite material in accordance with one of the preceding claims,
**characterized in that** the at least one copolyester has a melting viscosity, measured according to ISO/DIN 1133, at 160°C and a load of 2.16 kg, in the range of 100 to 3000 Pas, preferably of 100 to 600 Pas, particularly preferably of 120 to 500 Pas, and very particularly preferably from 150 to 300 Pas.

5. Fiber-resin composite material in accordance with one of the claims 1 to 3,
**characterized in that** the at least one copolyester is present as a fixing thread and has a melting viscosity, measured according to ISO/DIN 1133, at 160°C and a load of 2.16 kg, in the range of 1000 to 3000 Pas, preferably of 1500 to 2500 Pas, and particularly preferably of 1700 to 2200 Pas.

6. Fiber-resin composite material in accordance with one of the preceding claims,
**characterized in that** the at least one copolyester has a melting point, measured according to ISO 11357 at a heating rate of 20 K/min, in the range of 60 to 160°C, preferably of 70 to 150°C, and particularly preferably of 90 to 140°C.

7. Fiber-resin composite material in accordance with one of the preceding claims,
**characterized in that** the fibrous material is a unidirectional filament or an areal fibrous material from the group of fabrics, fleeces, knitted meshes, knitted fabrics, nonwovens or combinations hereof.

8. Fiber-resin composite material in accordance with one of the preceding claims,
**characterized in that** the at least one thermosetting resin is an epoxy resin.

9. Fiber-resin composite material in accordance with one of the preceding claims,
**characterized in that** the fiber-resin composite material has a strength in the interlaminar shear strength test of at least 55 MPa, preferably of at least 60 MPa, at a measuring temperature of 23°C.

10. Fiber-resin composite material in accordance with one of the preceding claims,
**characterized in that** the fiber-resin composite material has a compression after impact in the test of the compression after impact (CAI) of at least 185 MPa, preferably of at least 210 MPa, and particularly preferably of at least 245 MPa.

11. Fiber-resin composite material in accordance with one of the preceding claims, **characterized in that** the fiber-resin composite material is applicable in the areas of sports, leisure, machine industry, electronics, construction, medical engineering, means of traffic and transport, and aerospace engineering.

12. Method of manufacturing a fiber-resin composite material in accordance with one of the preceding claims in which the at least one agent for fixing and stabilizing the fibrous material is applied to the fibrous material by powder point coating, paste point coating or scatter coating or as a paste, suspension, film, web, nonwoven, fixed nonwoven or woven fabric or sprayed melt and a fixing of the fiber structure subsequently takes place by the effect of temperature and/or pressure.

## Revendications

1. Matériau composite fibres-résine, contenant au moins une résine thermodurcissable, ainsi qu'au moins une structure fibreuse fixée et/ou stabilisée en un matériau fibreux choisi dans le groupe consistant en :
- les fibres de verre,
- les fibres de carbone,
- les fibres minérales,
- les fibres synthétiques,
- les mélanges de celles-ci
ainsi qu'un agent pour sa fixation et sa stabilisation,
**caractérisé en ce que** l'agent assurant la fixation et la stabilisation est au moins un copolymère statistique, qui est formé à partir des composants suivants :
de 55 à 100 % en moles d'acide téréphtalique,
de 0 à 45 % en moles d'acide isophtalique,
de 35 à 75 % en moles de butanediol,
de 15 à 35 % en moles de diéthylèneglycol,
de 10 à 30 % en moles de triéthylèneglycol,
la somme des proportions en moles de l'acide téréphtalique et du butanediol étant au maximum de 150 % en moles par rapport à la quantité totale de diacide ou à la quantité totale de diol, chacune constituant 100 % en moles.

2. Matériau composite fibres-résine selon la revendication 1, **caractérisé en ce que** le ou les copolyesters statistiques sont formés à partir des composants suivants :
de 70 à 100 % en moles, de préférence de 85 à 100 % en moles d'acide téréphtalique,
de 0 à 30 % en moles, de préférence de 0 à 15 % en moles d'acide isophtalique,
de 45 à 65 % en moles, de préférence de 47 à 57 % en moles de butanediol,
de 20 à 30 % en moles, de préférence de 23 à 28 % en moles de diéthylèneglycol,
de 15 à 25 % en moles, de préférence de 20 à 25 % en moles de triéthylèneglycol,
la somme des proportions molaires de l'acide téréphtalique et du butanediol étant au maximum de 150 % en moles, rapportée à la quantité totale de diacide ou à la quantité totale de diol, chacune représentant 100 % en moles.

3. Matériau composite fibres-résine selon l'une des revendications précédentes, **caractérisé en ce que** le ou les copolyesters statistiques contiennent 0 à 2 en poids, de préférence 0,05 à 1 % en poids d'additifs, en particulier des agents de nucléation, des stabilisants, des lubrifiants, des antimousses, des catalyseurs de condensation, la somme des copolyesters et des additifs étant de 100 % en poids.

4. Matériau composite fibres-résine selon l'une des revendications précédentes, **caractérisé en ce que** le ou les copolyesters présentent une viscosité à l'état fondu, mesurée selon ISO/DIN 1133, à 160°C et sous une charge de 2,16 kg, comprise dans la plage de 100 à 3000 Pa.s, de préférence de 100 à 600 Pa.s, d'une manière particulièrement préférée de 120 à 500 Pa.s et d'une manière tout particulièrement préférée de 150 à 300 Pa.s.

5. Matériau composite fibres-résine selon l'une des revendications 1 à 3, **caractérisé en ce que** le ou les copolyesters se présentent sous la forme de fils de fixation, et présentent une viscosité à l'état fondu, mesurée selon ISO/DIN 1133, à 160°C et sous une charge de 2,16 kg, comprise dans la plage de 1000 à 3000 Pa.s, de préférence de 1500 à 2500 Pa.s et d'une manière particulièrement préférée de 1700 à 2200 Pa.s.

6. Matériau composite fibres-résine selon l'une des revendications précédentes, **caractérisé en ce que** le ou les copolyesters ont un point de fusion, mesuré selon ISO 11357 avec une vitesse de montée en température de 20 K/min, compris dans la plage de 60 à 160°C, de préférence de 70 à 150°C et d'une manière particulièrement préférée de 90 à 140°C.

7. Matériau composite fibres-résine selon l'une des revendications précédentes, **caractérisé en ce que** le matériau fibreux est un filament monodirectionnel ou un matériau fibreux bidimensionnel du groupe consistant en les tissus, les non-tissés, les tricotés, les maillés, les nappes ou les combinaisons de ceux-ci.

8. Matériau composite fibres-résine selon l'une des revendications précédentes, **caractérisé en ce que** la ou les résines thermodurcissables sont des résines époxydes.

9. Matériau composite fibres-résine selon l'une des revendications précédentes, **caractérisé en ce que** le matériau composite fibres-résine présente dans l'essai de résistance au cisaillement interlaminaire une résistance d'au moins 55 MPa, de préférence d'au moins 60 MPa, à une température de mesure de 23°C.

10. Matériau composite fibres-résine selon l'une des revendications précédentes, **caractérisé en ce que** le matériau composite fibres-résine présente, dans l'essai de résistance à la compression résiduelle après contrainte de choc (CAI) une résistance à la compression résiduelle d'au moins 185 MPa, en particulier d'au moins 210 MPa et d'une manière particulièrement préférée d'au moins 245 MPa.

11. Matériau composite à base de fibres selon l'une des revendications précédentes, **caractérisé en ce que** le matériau composite à base de fibres peut être utilisé dans les secteurs sport, loisirs, industrie mécanique, électronique, construction, technique médicale, moyens de locomotion et de transport, et techniques aéronautiques et aérospatiales.

12. Procédé de fabrication d'un matériau composite à base de fibres selon l'une des revendications précédentes, dans lequel le ou les agents assurant la fixation et la stabilisation du matériau fibreux est appliqué par application ponctuelle de poudre, par application ponctuelle de pâte ou par pulvérisation, ou sous forme d'une pâte, d'une suspension, d'un film, d'un voile, d'un non-tissé, d'une nappe ou d'un tissu bidimensionnel fixé ou d'une masse fondue pulvérisée sur le matériau fibreux, une fixation de la structure fibreuse étant réalisée ensuite sous l'action de la température et/ou de la pression.
